# FASCICULE DE BREVET EUROPEEN

(11) **EP 1 428 372 B1**
(45) Date de publication et mention de la délivrance du brevet: **11.08.2010**
(21) Numéro de dépôt: 02785497.5
(22) Date de dépôt: 13.09.2002
(51) Int. Cl.: H04L 29/06

(54) **SYSTEME DE TELECOMMUNICATION A CONFIDENTIALITE AMELIOREE**
TELEKOMMUNIKATIONSSYSTEM MIT VERBESSERTER DATENVERTRAULICHKEIT
TELECOMMUNICATION SYSTEM WITH IMPROVED CONFIDENTIALITY

(30) Priorité: 17.09.2001 FR 0112022
(43) Date de publication de la demande: 16.06.2004
(73) Titulaire: SAGEM MOBILES, 75015 Paris (FR)
(72) Inventeur: CHARBONNIER, Philippe, F-78600 Le-Mesnil-le-Roi (FR)
(74) Mandataire: Maillet, Alain
(86) Numéro de dépôt international: PCT/FR2002/003123
(87) Numéro de publication internationale: WO 2003/026256

(56) Documents cités:
- EP-A- 1 026 641
- WO-A-01/65340
- STEPHEN ELMY: "Found on Internet at <<http://www.travelpress.com/users/webworl d/c159.html>> on 16 July 2002" CANADIAN TRAVEL PRESS, avril 1999 (1999-04), XP002206220

## Description

La présente invention concerne un système de télécommunication incluant :
- un premier moyen de communication apte à communiquer avec un réseau de transfert de données et destiné à être mis à disposition d'un utilisateur du système, et
- un deuxième moyen de communication apte à communiquer avec ledit réseau, appartenant à un interlocuteur de l'utilisateur.

Dans ce type de système, le premier moyen de communication peut être constitué par un terminal relié à un réseau de type Internet, mis à disposition de l'utilisateur dans un cybercafé, un hôtel ou un salon d'aéroport.

Le deuxième moyen de communication pourra être un serveur relié à une base de données appartenant à l'interlocuteur qui sera, selon le choix de l'utilisateur, une banque ou encore une société de commerce en ligne.

Le document WO 01/65340, publié le 7 september 2001, divulgue un système de télécommunication incluant: un premier moyen de communication apte à communiquer avec un réseau de transfert de donnés et destiné à être mis à disposition d'un utilisateur du système, et un deuxième moyen de communication apte à communiquer avec ledit réseau, appartenant à un interlocuteur de l'utilisateur. Le système inclut en outre un objet dit personnel, destiné à être détenu par l'utilisateur du système.

Dans un tel système, l'utilisateur ne possède pas la maîtrise de la confidentialité de ses données propres. Si, au cours d'un échange avec l'interlocuteur, ce dernier demande à l'utilisateur son identité ou un code d'accès ou encore un mot de passe, l'information qui sera fournie en retour par l'utilisateur transitera par le premier moyen de communication sur lequel l'utilisateur n'exerce qu'un contrôle limité le plus souvent à des fonctions d'interface. En particulier, l'utilisateur ne peut pas avoir la certitude que le premier moyen de communication ne mémorisera pas dans un registre caché l'information confidentielle qui le traversera, en vue d'une future utilisation illicite de ladite information par une personne non-autorisée qui aura accès au registre caché.

Un tel état de fait crée un sentiment d'insécurité parmi les utilisateurs qui est nuisible au développement du commerce en ligne par l'intermédaire de moyens de communication dont ils ne sont pas propriétaires, et qui est préjudiciable non seulement aux commerçants en ligne, mais aussi aux opérateurs de réseau et aux fabricants d'équipements destinés auxdits réseaux.

La présente invention a pour but de remédier dans une large mesure à ces inconvénients en proposant un système de télécommunication assurant à l'utilisateur une plus grande maîtrise de la confidentialité de ses données propres.

En effet, l'invention inclut un système conforme à la revendication 1.

L'objet personnel peut être un radiotéléphone, un organiseur de poche ou n'importe quel autre dispositif, de préférence de type portable, dans lequel l'utilisateur aura mémorisé des données confidentielles qui lui sont propres, comme des numéros d'identité, des codes d'accès et autres mots de passe, ou encore des données bancaires ou médicales.

L'objet personnel sera le plus souvent muni de capacités moins importantes que celles offertes à l'utilisateur par le premier moyen de communication en termes de débit et d'interface homme/machine.

L'objet personnel et le premier moyen de communication pourront communiquer via une liaison filaire ou radio.

Dans le système selon l'invention, le premier moyen de communication n'a plus la possibilité matérielle de manipuler ou de mémoriser les données qui le traversent dès lors qu'il a été placé en mode de fonctionnement transparent. Ainsi, si au cours d'un échange entre l'interlocuteur et l'utilisateur, ce dernier est invité à produire une donnée confidentielle, le premier moyen de communication sera placé en mode de fonctionnement transparent avant que la donnée confidentielle ne soit effectivement émise par l'objet personnel.

Une telle mesure, lorsqu'elle leur sera communiquée, aura pour effet de rassurer les utilisateurs quant à la préservation de la confidentialité de leurs données propres et contribuera ainsi à l'essor du commerce en ligne.

La configuration du premier moyen de communication en mode de fonctionnement transparent pourra, selon le cas, être déclenchée par un signal de commande émis par l'objet personnel, par exemple après réception d'une requête de données confidentielles, ou par le deuxième moyen de communication, par exemple simultanément ou immédiatement après avoir émis une telle requête.

L'objet personnel pourra générer un tel signal de commande automatiquement avant émission d'une donnée confidentielle ou après en avoir reçu l'ordre de la part de l'utilisateur.

Dans une variante avantageuse de l'invention, l'objet personnel sera apte à communiquer directement avec le deuxième moyen de communication, par exemple par voie d'ondes radioélectriques si l'objet personnel et le deuxième moyen de communication disposent tous deux de ressources d'émission/réception radio, par exemple compatibles avec les standards GSM ou UMTS. Dans le système de télécommunication conforme à cette variante, une communication directe est établie entre l'objet personnel et le deuxième moyen de communication lorsque le premier moyen de communication est configuré en mode transparent.

Une telle communication directe permet de garantir, en tenant le premier moyen de communication à l'écart, que celui-ci ne puisse mettre en danger la confidentialité des données échangées entre l'objet personnel et le deuxième moyen de communication.

Dans un mode de réalisation particulièrement avantageux de l'invention, un système de télécommunication tel que décrit plus haut inclut des moyens de chiffrement des données transitant entre l'objet personnel et le deuxième moyen de communication, lesquels moyens de chiffrement sont destinés à être activés lorsque le premier moyen de communication est configuré en mode transparent.

Les moyens de chiffrement offrent une garantie supplémentaire à l'utilisateur quant au caractère confidentiel de la communication de ses données propres au deuxième moyen de communication.

L'invention concerne aussi un appareil émetteur/récepteur de signaux radioélectriques apte à remplir les fonctions de l'objet personnel inclus dans un système de télécommunication tel que défini selon la revendication 7.

D'une manière plus générale, l'invention concerne en outre un procédé de transmission de données selon la revendication 8.

Dans une variante de ce procédé, une communication directe est établie entre l'objet personnel et le deuxième moyen de communication lorsque le premier moyen de communication est configuré en mode transparent.

Dans un mode de mise en oeuvre particulièrement avantageux d'un tel procédé, les données transitant entre l'objet personnel et le deuxième moyen de communication sont chiffrées lorsque le premier moyen de communication est configuré en mode transparent.

Ainsi qu'exposé précédemment, un tel procédé permet d'assurer à l'utilisateur une meilleure confidentialité de ses données propres et contribue à l'essor du commerce électronique.

Les caractéristiques de,l'invention mentionnées ci-dessous, ainsi que d'autres apparaîtront plus clairement à la lecture de la description suivante d'un exemple de réalisation, ladite description étant faite en relation avec les dessins joints, parmi lesquels :
la Fig.1 est un schéma fonctionnel décrivant un système de télécommunication selon l'invention,
l a Fig.2 est un schéma fonctionnel décrivant une variante d'un tel système de télécommunication,
la Fig.3 est un organigramme décrivant un procédé de transmission de données mis en oeuvre dans de tels systèmes, et
la Fig.4 est un organigramme décrivant une variante d'un tel procédé.

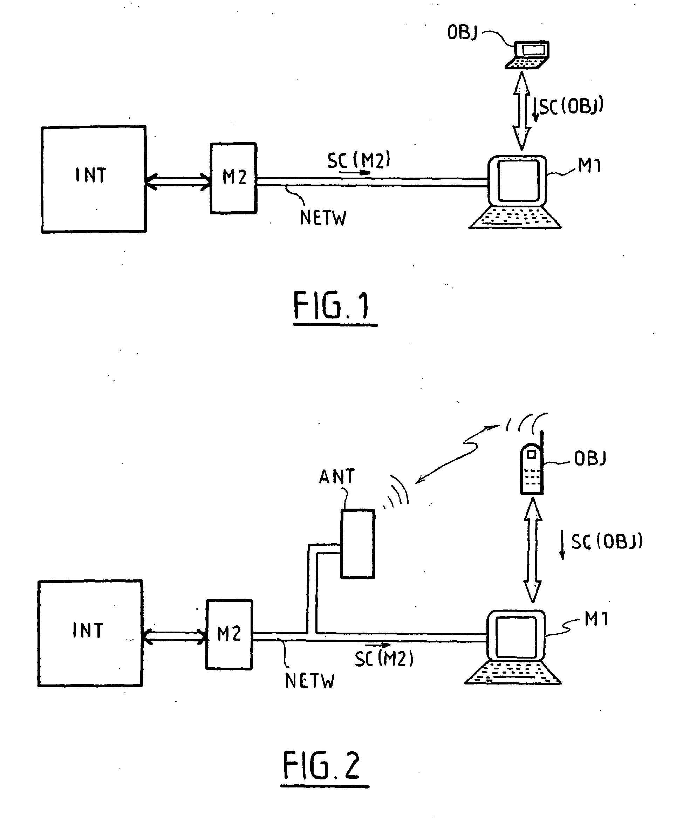

La Fig.1 représente schématiquement un système de télécommunication incluant :
- un objet dit personnel OBJ, destiné à être détenu par un utilisateur du système,
- un premier moyen de communication M1 apte à communiquer avec l'objet personnel OBJ, d'une part, et avec un réseau de transfert de données NETW, d'autre part, et destiné à être mis à disposition de l'utilisateur, et
- un deuxième moyen de communication M2 apte à communiquer avec ledit réseau NETW, appartenant à un interlocuteur INT de l'utilisateur.

L'objet personnel OBJ est, dans cet exemple, un organiseur de poche, le premier moyen de communication M1 étant un terminal multimédia mis à la disposition de l'utilisateur dans un cybercafé ou dans un salon d'aéroport, le deuxième moyen de communication M2 étant un serveur appartenant à l'interlocuteur INT.

Dans ce système, le premier moyen de communication M1 est apte à être configuré dans un mode de fonctionnement transparent au cours duquel ledit premier moyen M1 est incapable d'agir sur des données transitant entre l'objet personnel OBJ et le deuxième moyen de communication M2. La configuration en mode de fonctionnement transparent du premier moyen de communication M1 peut être déclenchée, selon les cas, soit au moyen d'un signal de commande SC(OBJ) émis par l'objet personnel OBJ, soit au moyen d'un signal de commande SC(M2) émis par le deuxième moyen de communication M2.

Par exemple, si l'interlocuteur INT est un établissement bancaire et émet une requête en direction de l'utilisateur en vue d'obtenir de celui-ci des codes confidentiels, tels un numéro de compte et un mot de passe permettant de consulter l'état dudit compte, une telle requête sera signalée à l'utilisateur qui pourra ordonner à l'objet personnel d'émettre vers le premier moyen de communication M1 le signal de commande SC(OBJ) en vue de placer ledit premier moyen M1 en mode de fonctionnement transparent avant d'envoyer effectivement les données confidentielles à l'interlocuteur INT. Un tel envoi pourra être fait sous forme chiffrée via des moyens de chiffrement non-représentés sur la figure, qui seront par exemple conformes aux spécifications SSL (de l'anglais Secure Sockets Layer).

L'envoi du signal de commande SC(OBJ) par l'objet personnel peut être fait de manière automatique par ledit objet s'il a été préalablement programmé pour envoyer un tel signal dès identification d'une requête de données confidentielles.

Il est également envisageable que le deuxième moyen de communication M2 soit configuré de telle sorte qu'il émette un signal de commande SC(M2) visant à placer le premier moyen de communication M1 en mode de fonctionnement transparent simultanément ou immédiatement après émission d'une requête de données confidentielles par le deuxième moyen de communication, ce qui évite toute intervention de l'objet personnel OBJ et/ou de l'utilisateur lui-même.

Un tel signal de commande SC(OBJ) ou SC(M2) peut prendre par exemple la forme d'une séquence d'échappement particulière insérée dans un flux de données envoyé au premier moyen de communication M1.

Le mode de fonctionnement transparent peut être obtenu de diverses manières : le premier moyen de communication M1 pourra par exemple être configuré de sorte que, pendant ce mode de fonctionnement, il sera interdit audit premier moyen M1 d'exécuter des fonctions au-dessus d'un niveau OSI prédéterminé, correspondant par exemple à des activités de récupération d'erreurs. Toute fonction d'un niveau OSI supérieur, comme des opérations de lecture, de mémorisation ou d'altération de données, sera alors momentanément inhibée, garantissant ainsi la confidentialité des données transitant au travers du premier moyen de communication M1 ainsi configuré. A fortiori, si ces données sont chiffrées, le premier moyen de communication M1 sera incapable de les déchiffrer, et encore moins de les altérer de manière indécelable par l'interlocuteur INT.

La Fig.2 est un schéma fonctionnel qui représente une variante du système de télécommunication précédemment décrit. Les éléments communs aux deux systèmes ont été munis des mêmes signes de référence et ne seront pas à nouveau décrits. Dans ce système, l'objet personnel OBJ est un radiotéléphone et le deuxième moyen de communication M2 est muni de ressources ANT d'émission/réception qui le rendent apte à communiquer avec l'objet personnel OBJ, par exemple par l'intermédiaire d'un réseau cellulaire de type GSM ou UMTS. Dans ce système de télécommunication, une communication directe est établie entre l'objet personnel OBJ et le deuxième moyen de télécommunication M2 lorsque le premier moyen de communication est configuré en mode transparent. Un tel mode de réalisation de la configuration en mode de fonctionnement transparent du premier moyen de communication M1 permet de garantir, en tenant ledit moyen M1 à l'écart de l'échange de données entre l'objet personnel OBJ et le deuxième moyen de communication M2, que le premier moyen de communication M1 ne puisse mettre en danger la confidentialité des données ainsi échangées entre l'objet personnel OBJ et le deuxième moyen de communication M2.

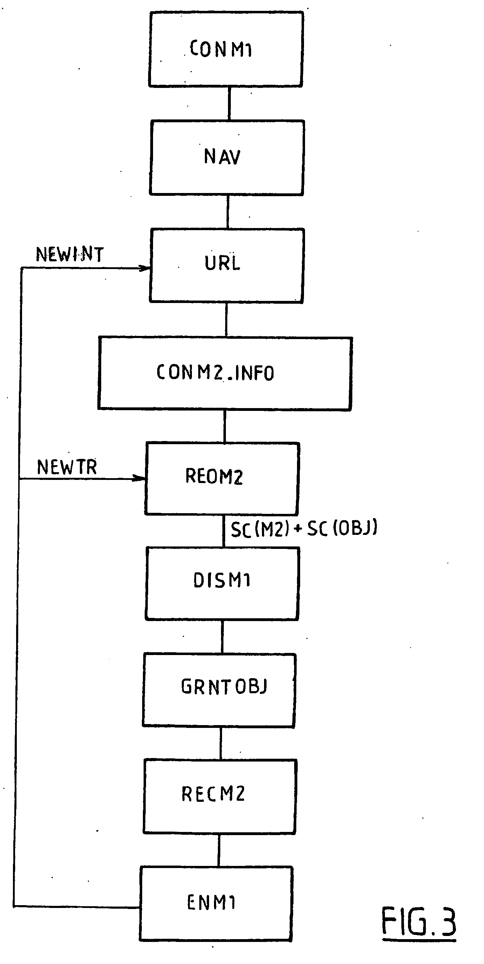

La Fig.3 est un organigramme qui illustre le déroulement d'un procédé de transmission de données selon l'invention. Conformément à ce procédé, au cours d'une première étape CONM1, l'utilisateur se connecte au premier moyen de communication M1, éventuellement via son objet personnel OBJ. Au cours d'une étape suivante NAV, l'utilisateur lance un navigateur servant d'interface avec le réseau de transfert de données. Au cours d'une étape suivante URL, il compose une adresse afin d'établir une connexion avec l'interlocuteur qu'il a choisi. Au cours d'une étape suivante CNM2.INFO, la connexion est établie et l'interlocuteur INT informe l'utilisateur que l'échange de données sera effectué au moyen d'un système de télécommunication ou d'un procédé conforme à l'invention, afin de convaincre l'utilisateur que la transmission de toute donnée sensible qu'il pourrait être amené à fournir à son interlocuteur bénéficiera de conditions de confidentialité optimales. Au cours d'une étape suivante REQM2, l'interlocuteur INT requiert de la part de l'utilisateur des données qui lui sont propres. Par exemple, si l'interlocuteur est un commerçant en ligne, il pourra être amené, au cours d'une transaction, à demander à l'utilisateur un numéro de carte bancaire afin de prélever sur un compte bancaire associé le montant de la transaction. Une telle requête peut être assortie d'un signal de commande SC(M2) envoyé, simultanément ou immédiatement après ladite requête, par le deuxième moyen de communication M2 au premier moyen de communication M1, dans les conditions décrites précédemment, destiné à configurer le premier moyen de communication M1 en mode de fonctionnement transparent. A défaut, l'objet personnel OBJ peut, dès réception de cette requète, émettre, automatiquement ou sur ordre de l'utilisateur, un signal de commande SC(OBJ) destiné aux mêmes fins. Le caractère alternatif possible de ces évènements est indiqué par la transition SC(M2)+SC(OBJ), dans laquelle il faut prendre le signe "+" dans son sens "OU" booléen. Au cours d'une étape suivante DISM1, le premier moyen de communication M1 est configuré en mode transparent et incapable d'agir sur les données le traversant au cours de ce mode de fonctionnement, garantissant ainsi la confidentialité de l'échange se déroulant alors entre le deuxième moyen de communication M2 et l'objet personnel OBJ. Au cours d'une étape suivante GRNTOBJ, l'objet personnel OBJ accède à la requête de l'interlocuteur INT et transmet les données confidentielles requises par celui-ci. Dans une étape suivante RECM2, le deuxième moyen de communication reçoit lesdites données et lève l'inhibition imposée au premier moyen de communication. Dans une étape suivante ENM1, ledit premier moyen de communication M1 abandonne le mode de fonctionnement transparent et reprend un régime de fonctionnement normal et non-sécurisé, jusqu'à ce qu'un nouvel échange de données sensibles s'avère nécessaire, par exemple dans le cadre d'une nouvelle transaction entre l'utilisateur et le même interlocuteur INT, possibilité matérialisée par la transition NEWTR, ou une autre transaction avec un nouvel interlocuteur, possibilité matérialisée par la transition NEWINT.

On comprend bien que, l'utilisateur ayant été informé au cours de l'étape CONM2+INFO de la sécurisation, rendue possible grâce à l'invention, de l'échange de données devant intervenir au cours de la transaction qu'il envisage de conclure, ledit utilisateur sera plus enclin à procéder effectivement à cette transaction. Il est tout-à-fait envisageable de confier au premier moyen de communication M1 le soin d'informer encore plus en amont l'utilisateur de cet avantage afin d'instaurer au plus tôt un climat de confiance, par exemple dès l'étape CONM1 à l'issue de laquelle l'utilisateur est connecté au premier moyen de communication M1.

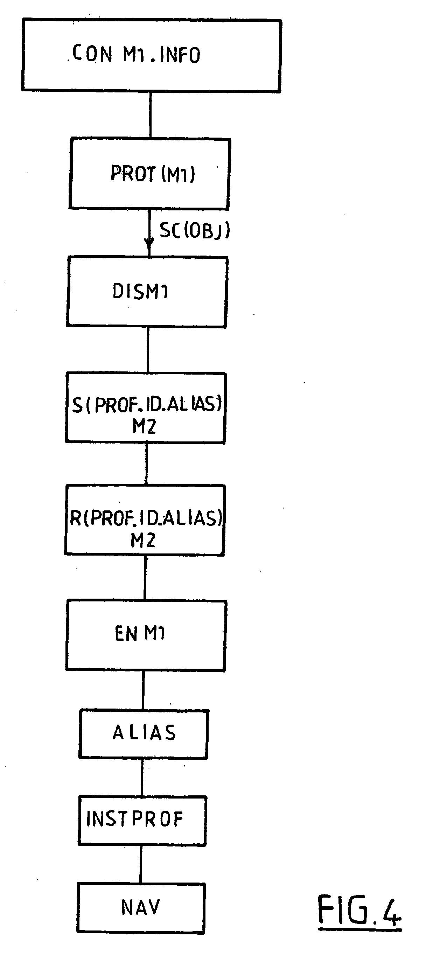

La Fig.4 illustre une variante du procédé décrit ci-dessus, destiné à une mise en oeuvre dans un système de télécommunication dans lequel le deuxième moyen de communication M2 est solidaire du premier moyen de communication M1. Dans un tel cas de figure, le deuxième moyen de communication M2 pourra être par exemple le serveur d'une base de données centrale propre à une chaîne de cybercafés ou de salons d'aéroport, pour reprendre les exemples précédents, chaîne à laquelle appartient le premier moyen de communication M1. L'utilisateur peut en effet vouloir créer et sauvergarder un profil, c'est-à-dire un ensemble d'adresses réseau et/ou de mots de passe et de codes d'accès y afférents, et désirer que son identité réelle ne puisse pas être associée à ce profil par le terminal local par l'intermédiaire duquel il communique avec cette base de données centrale, afin de préserver localement un anonymat cybernétique. Un procédé de télécommunication selon cette variante de l'invention comprendra alors avantageusement une première étape CONM1.INFO, au cours de laquelle l'utilisateur se connecte au premier moyen de communication M1, éventuellement via son objet personnel OBJ. Au cours de cette même étape, l'utilisateur est informé du fait que, grâce à l'utilisation d'un système de télécommunication ou d'un procédé conforme à l'invention, il a la possibilité de créer un profil personnel ou d'extraire un profil personnel de son objet personnel et de le faire enregistrer dans la base de données centrale sans qu'aucune trace de son identité réelle ne puisse subsister localement en association avec ledit profil. Au cours d'une étape suivante PROT(M1), un protocole d'échange d'informations entre l'objet personnel OBJ et le premier moyen de communication M1 est mis en oeuvre afin de permettre audit objet d'envoyer un signal de commande SC(OBJ) audit premier moyen afin de configurer ce dernier en mode de fonctionnement transparent après que l'utilisateur ait produit son profil. Au cours d'une étape suivante DISM1, le premier moyen de communication M1 est configuré en mode transparent et incapable d'agir sur les données le traversant au cours de ce mode de fonctionnement, garantissant ainsi la confidentialité de tout échange se déroulant alors entre l'objet personnel OBJ et le deuxième moyen de communication M2. Au cours d'une étape suivante S(PROF.ID.ALIAS)M2, l'objet personnel OBJ transmet le profil produit par l'utilisateur, accompagné de son identité réelle et d'un alias choisi par l'utilisateur, au deuxième moyen de communication M2. Dans une étape suivante R(PROF.ID.ALIAS)M2, le deuxième moyen de communication accuse réception dudit profil à l'objet personnel OBJ, ce qui déclenche une levée de l'inhibition imposée au premier moyen de communication M1. Dans une étape suivante ENM1, ledit premier moyen de communication M1 abandonne le mode de fonctionnement transparent et reprend un régime de fonctionnement normal et non-sécurisé. Dans une étape suivante ALIAS, l'utilisateur donne son alias au premier moyen de communication M1, dans le but de faire installer son profil sur ledit premier moyen de communication M1. Dans une étape suivante INSTPROF, le deuxième moyen de communication M2 fournit au premier moyen de communication M1, à la demande de celui-ci, le profil précédemment défini par l'utilisateur, lequel profil est alors effectivement installé sur le premier moyen de communication M1. Au cours d'une étape suivante NAV, l'utilisateur peut lancer un navigateur servant d'interface avec le réseau de transfert de données. Cette étape peut être suivie des étapes qui suivent l'étape homonyme dans la figure précédente.

Il ressort clairement de la description précédente que l'invention, en améliorant les conditions de sécurité des échanges de données électroniques, aura pour conséquence de rassurer les acteurs de tels échanges, pour peu qu'ils soient informés des avantages de l'invention. L'invention contribuera ainsi à l'essor du commerce électronique et au respect de la vie privée des utilisateurs des réseaux de transfert de données.

## Revendications

1. Système de télécommunication incluant :
- un premier moyen de communication apte à communiquer avec un réseau de transfert de données et destiné à être mis à disposition d'un utilisateur du système, et
- un deuxième moyen de communication apte à communiquer avec ledit réseau, appartenant à un interlocuteur de l'utilisateur,
système **caractérisé en ce qu'**il inclut en outre un objet dit personnel, destiné à être détenu par l'utilisateur du système, et **en ce que** le premier moyen de communication est apte à être configuré dans un mode de fonctionnement transparent au cours duquel ledit premier moyen est incapable d'agir sur des données transitant entre l'objet personnel et le deuxième moyen de communication garantissant ainsi la confidentialité des données transitant au travers du premier moyen de communication ainsi configuré.

2. Système de télécommunication selon la revendication 1, dans lequel la configuration en mode de fonctionnement transparent du premier moyen de communication est déclenchée par un signal de commande émis par l'objet personnel.

3. Système de télécommunication selon la revendication 1, dans lequel la configuration en mode de fonctionnement transparent du premier moyen de communication est déclenchée par un signal de commande émis par le deuxième moyen de communication.

4. Système de télécommunication selon l'une des revendications 1 à 3, dans lequel, l'objet personnel étant en outre apte à communiquer avec le deuxième moyen de communication, une communication directe est établie entre l'objet personnel et le deuxième moyen de communication lorsque le premier moyen de communication est configuré en mode transparent

5. Système de télécommunication selon l'une des revendications 1 à 4, incluant des moyens de chiffrement des données transitant entre l'objet personnel et le deuxième moyen de communication, lesquels moyens de chiffrement sont destinés à être activés lorsque le premier moyen de communication est configuré en mode transparent.

6. Système de télécommunication selon l'une des revendications 1 à 5, dans lequel l'objet personnel est un radiotéléphone.

7. Appareil émetteur/récepteur de signaux radioélectriques apte à remplir les fonctions de l'objet personnel inclus dans un système de télécommunication conforme à l'une des revendications 1 à 5 **caractérisé en ce qu'**il comporte des moyens pour configurer ledit premier moyen de communication dans un mode de fonctionnement transparent au cours duquel ledit premier moyen est incapable d'agir sur des données transitant au travers dudit premier moyen entre l'objet personnel détenu par l'utilisateur et le deuxième moyen de communication.

8. Procédé de transmission de données entre :
- un premier moyen de communication apte à communiquer avec un réseau de transfert de données et destiné à être mis à disposition d'un utilisateur du procédé, et
- un deuxième moyen de communication apte à communiquer avec ledit réseau, appartenant à un interlocuteur de l'utilisateur,
procédé incluant une étape de configuration du premier moyen de communication dans un mode de fonctionnement transparent au cours duquel ledit premier moyen est
incapable d'agir sur des données transitant au travers du premier moyen entre un objet personnel détenu par l'utilisateur et le deuxième moyen de communication.

9. Procédé de transmission de données selon la revendication 8, dans lequel l'étape de configuration est déclenchée par un signal de commande émis par l'objet personnel.

10. Procédé de transmission de données selon la revendication 8, dans lequel l'étape de configuration est déclenchée par un signal de commande émis par le deuxième moyen de communication.

11. Procédé de transmission de données selon l'une des revendications 8 à 10, dans lequel une communication directe est établie entre l'objet personnel et le deuxième moyen de communication lorsque le premier moyen de communication est configuré en mode transparent

12. Procédé de transmission de données selon l'une des revendications 8 à 11, dans lequel les données transitant entre l'objet personnel et le deuxième moyen de communication sont chiffrées lorsque le premier moyen de communication est configuré en mode transparent

13. Procédé de transmission de données selon l'une des revendications 8 à 12 **caractérisé en ce qu'**il comporte en outre une étape au cours de laquelle au moins un des moyens de communication est informé du fait que ladite transmission sera réalisée au moyen d'un système de télécommunication conforme à la revendication 1.

14. Procédé de transmission de données selon l'une des revendications 8 à 12 **caractérisé en ce qu'**il comporte en outre une étape au cours de laquelle au moins un des moyens de communication est informé du fait que ladite transmission sera réalisée au moyen d'un procédé de transmission de données conforme à la revendication 8.

## Claims

1. Telecommunication system comprising:
- first communication means adapted to communicate with a data transfer network and intended to be made available to a user of the system, and
- second communication means adapted to communicate with said network, belonging to a person speaking to the user,
the system being **characterised in that** it further comprises a so-called personal object adapted to be held by the user of the system; and **in that** the first communication means are adapted to be configured in a transparent operating mode in the course of which the said first means are incapable of acting on the data being transferred between the personal object and the second communication means, thus guaranteeing the confidentiality of the data being transferred via the first communication means thus configured.

2. Telecommunication system according to claim 1, wherein the configuration in the transparent operating mode of the first communication means is triggered by a control signal emitted by the personal object.

3. Telecommunication system according to claim 1, wherein the configuration in the transparent operating mode of the first communication means is triggered by a control signal emitted by the second communication means.

4. Telecommunication system according to one of claims 1 to 3, wherein, with the personal object further being adapted to communicate with the second communication means, direct communication is established between the personal object and the second communication means when the first communication means are configured in transparent mode.

5. Telecommunication system according to one of claims 1 to 4, comprising means for encrypting data being transferred between the personal object and the second communication means, said encrypting means being intended to be activated when the first communication means are configured in transparent mode.

6. Telecommunication system according to one of claims 1 to 5, wherein the personal object is a radiotelephone.

7. Transmitting/receiving apparatus for radio signals, adapted to perform the functions of the personal object included in a telecommunication system according to one of claims 1 to 5, **characterised in that** it comprises means for configuring said first communication means in a transparent operating mode in the course of which the said first means are incapable of acting on the data being transferred via said first means between the personal object held by the user and the second communication means.

8. Process for data transmission between:
- first communication means adapted to communicate with a data transfer network and intended to be made available to a user of the process, and
- second communication means adapted to communicate with said network, belonging to a person speaking to the user,
the process comprising a step of configuring the first communication means in a transparent operating mode in the course of which the said first means are incapable of acting on the data being transferred via the first means between a personal object held by the user and the second communication means.

9. Data transmission process according to claim 8, wherein the configuration step is triggered by a control signal emitted by the personal object.

10. Data transmission process according to claim 8, wherein the configuration step is triggered by a control signal emitted by the second communication means.

11. Data transmission process according to one of claims 8 to 10, wherein direct communication is established between the personal object and the second communication means when the first communication means are configured in transparent mode.

12. Data transmission process according to one of claims 8 to 11, wherein the data being transferred between the personal object and the second communication means are encrypted when the first communication means are configured in transparent mode.

13. Data transmission process according to one of claims 8 to 12, **characterised in that** it further comprises a step in which at least one of the communication means is informed of the fact that said transmission will be carried out by a telecommunication system according to claim 1.

14. Data transmission process according to one of claims 8 to 12, **characterised in that** it further comprises a step in which at least one of the communication means is informed of the fact that said transmission will be carried out by a data transmission process according to claim 8.

## Patentansprüche

1. Telekommunikationssystem, aufweisend:
- eine erste Kommunikationseinrichtung zur Kommunikation mit einem Datenübertragungsnetz und zur Bereitstellung für einen Systemnutzer, und
- eine zweite Kommunikationseinrichtung zur Kommunikation mit dem Netz, die zu einem Gesprächspartner des Nutzers gehört,
wobei das System **dadurch gekennzeichnet ist, dass** es weiterhin ein Personalgerät aufweist, das dem Nutzer des Systems gehört, und dass die erste Kommunikationseinrichtung in einem transparenten Funktionsmodus konfiguriert werden kann, während dem die erste Einrichtung nicht in der Lage ist, auf Durchgangsdaten zwischen dem Personalgerät und der zweiten Übertragungseinrichtung einzuwirken, so dass die Vertraulichkeit der Durchgangsdaten über die so konfigurierte erste Kommunikationseinrichtung garantiert wird.

2. Telekommunikationssystem nach Anspruch 1, bei dem die Konfiguration im transparenten Funktionsmodus der ersten Kommunikationseinrichtung durch ein Befehlssignal ausgelöst wird, das vom Personalgerät emittiert wird.

3. Telekommunikationssystem nach Anspruch 1, bei dem die Konfiguration im transparenten Funktionsmodus der ersten Kommunikationseinrichtung durch ein Befehlssignal ausgelöst wird, das von der zweiten Kommunikationseinrichtung emittiert wird.

4. Telekommunikationssystem nach einem der Ansprüche 1 bis 3, bei dem das vom Personalgerät außerdem mit der zweiten Kommunikationseinrichtung kommunizieren kann, und eine direkte Kommunikation zwischen dem Personalgerät und der zweiten Kommunikationseinrichtung aufgebaut wird, wenn die erste Kommunikationseinrichtung im transparenten Modus konfiguriert ist.

5. Telekommunikationssystem nach einem der Ansprüche 1 bis 4, aufweisend Chiffriereinrichtungen der Durchgangsdaten zwischen dem Personalgerät und der zweiten Kommunikationseinrichtung, die aktiviert werden können, wenn die erste Kommunikationseinrichtung im transparenten Modus konfiguriert ist.

6. Telekommunikationssystem nach einem der Ansprüche 1 bis 5, bei dem das Personalgerät ein Funktelefon ist.

7. Sende/Empfangsgerät für radiotelegrafische Signale zur Durchführung der Funktionen des Personalgeräts, das in einem Telekommunikationssystem gemäß einem der Ansprüche 1 bis 5 enthalten ist,
**dadurch gekennzeichnet, dass** es Einrichtungen aufweist, um die erste Kommunikationseinrichtung in einem transparenten Funktionsmodus zu konfigurieren, während dem die erste Einrichtung nicht in der Lage ist, auf Durchgangsdaten über die erste Einrichtung zwischen dem Personalgerät, das dem Nutzer gehört, und der zweiten Kommunikationseinrichtung einzuwirken.

8. Verfahren zur Datenübertragung zwischen:
- einer ersten Kommunikationseinrichtung zur Kommunikation mit einem Datenübertragungsnetz und zur Bereitstellung für einen Nutzer des Verfahrens, und
- einer zweiten Kommunikationseinrichtung zur Kommunikation mit dem Netz, die einem Gesprächspartner des Nutzers gehört, wobei das Verfahren einen Konfigurationsschritt der ersten Kommunikationseinrichtung in einem transparenten Funktionsmodus aufweist, während dem die erste Einrichtung nicht in der Lage ist, auf Durchgangsdaten über die erste Einrichtung zwischen einem Personalgerät, das dem Nutzer gehört, und der zweiten Kommunikationseinrichtung einzuwirken.

9. Datenübertragungsverfahren nach Anspruch 8, bei dem der Konfigurationsschritt von einem Steuersignal ausgelöst wird, das vom Personalgerät emittiert wird.

10. Datenübertragungsverfahren nach Anspruch 8, bei dem der Konfigurationsschritt von einem Steuersignal ausgelöst wird, das von der zweiten Kommunikationseinrichtung emittiert wird.

11. Datenübertragungsverfahren nach einem der Ansprüche 8 bis 10, bei dem eine direkte Kommunikation zwischen dem Personalgerät und der zweiten Kommunikationseinrichtung aufgebaut wird, wenn die erste Kommunikationseinrichtung in einem transparenten Modus konfiguriert ist.

12. Datenübertragungsverfahren nach einem der Ansprüche 8 bis 11, bei dem die Durchgangsdaten zwischen dem Personalgerät und der zweiten Kommunikationseinrichtung chiffriert werden, wenn die erste Kommunikationseinrichtung in einem transparenten Modus konfiguriert ist.

13. Datenübertragungsverfahren nach einem der Ansprüche 8 bis 12, **dadurch gekennzeichnet, dass** es weiterhin einen Schritt aufweist, während dem wenigstens eine der Kommunikationseinrichtungen über die Tatsache informiert wird, dass die Übertragung mittels eines Telekommunikationssystems gemäß Anspruch 1 realisiert wird.

14. Datenübertragungsverfahren nach einem der Ansprüche 8 bis 12, **dadurch gekennzeichnet, dass** es weiterhin einen Schritt aufweist, während dem wenigstens eine der Kommunikationseinrichtungen über die Tatsache informiert wird, dass die Übertragung mittels eines Datenübertragungsverfahrens gemäß Anspruch 8 realisiert wird.
